# EUROPEAN PATENT APPLICATION

(11) **EP 2 763 131 A1**
(43) Date of publication of application: **06.08.2014**
(21) Application number: 14153101.2
(22) Date of filing: 29.01.2014
(51) Int. Cl.: G09G 5/14, G06F 3/048

(54) **Method and electronic device for configuring screen**

(30) Priority: 30.01.2013 KR 20130010356
(71) Applicant: Samsung Electronics Co., Ltd, Gyeonggi-do 443-742 (KR)
(72) Inventor: Kang, Doo-Suk, Gyeonggi-do (KR); Jeon, Yong-Joon, Gyeonggi-do (KR)
(74) Representative: Nederlandsch Octrooibureau

(57) **Abstract**

A device and method for configuring a screen of an electronic device are provided. The method of configuring the screen of the electronic device includes determining an area for displaying a first object, displaying a first area for displaying the first object, moving at least one second object to a remaining area if there is at least one second object on the first area, the remaining area being an area other than the first area, and displaying the first object on the first area after moving the at least one second object to the remaining area.

## Description

### TECHNICAL FIELD

The present disclosure relates to a method and electronic device for configuring a screen.

### BACKGROUND

Electronic devices have become necessities in a modem society due to easy portability and are being developed as multimedia devices that provide various services, such as voice and video call functions, application program functions, information input and output functions, data storage, and any other similar and/or suitable function or service that may be provided on electronic devices.

Moreover, in addition to application programs that are provided by the electronic devices, users install and use various application programs in the electronic devices as needed. In order to easily execute frequently used application programs from among the various application programs, users may add, to home screens of the electronic devices, shortcuts that may execute application programs.

When the electronic device has an area, such as a display area of a display unit of the electronic device, insufficient for adding a shortcut for an application program to the home screen of the electronic device, the electronic device may display a popup message informing that an area is insufficient, and ends an operation for adding the shortcut of the application program. In this case, the user may edit the home screen to provide an area for adding the application program, and performs the operation for adding the shortcut of the application program. That is, when the electronic device has an area insufficient for adding a shortcut of an application program to a home screen of the electronic device, a user may perform several operations and add the shortcut of the application program to the home screen of the electronic device.

Thus, there is a need for an electronic device having an interface for providing an easy and convenient editing of a home screen.

The above information is presented as background information only to assist with an understanding of the present disclosure. No determination has been made, and no assertion is made, as to whether any of the above might be applicable as prior art with regard to the present disclosure.

### SUMMARY

Aspects of the present disclosure are to address at least the above-mentioned problems and/or disadvantages and to provide at least the advantages below. Accordingly, an aspect of the present disclosure is to provide a device and method for configuring a screen in an electronic device.

Another aspect of the present disclosure is to provide a device and method for determining an area for adding an object to a home screen in an electronic device.

Another aspect of the present disclosure is to provide a device and method for displaying an area for adding an object to a home screen in an electronic device.

Another aspect of the present disclosure is to provide a device and method for moving and displaying a preset object to any area so as to add an object to a home screen in an electronic device.

In accordance with an aspect of the present disclosure, a method of configuring a screen of an electronic device is provided. The method includes determining an area for displaying a first object, displaying a first area for displaying the first object, moving at least one second object to a remaining area, the remaining area being an area other than the first area, if there is at least one second object on the first area, and displaying the first object on the first area after moving the at least one second object to the remaining area.

In accordance with another aspect of the present disclosure, an electronic device is provided. The electronic device includes at least one processor, at least one memory, and at least one program stored in the memory, wherein the at least one program is configured to be executable by the at least one processor, and the at least one processor is configured to determine an area for displaying a first object, display a first area for displaying the first object, move at least one second object to a remaining area if there is at least one second object on the first area, the remaining area being an area other than the first area, and display the first object on the first area after moving the at least one second object to the remaining area.

Preferably, the electronic device is at least one processor; at least one memory; and at least one program stored in the memory, wherein the at least one program is configured to be executable by the at least one processor, and the at least one processor is configured to: determine an area for displaying a first object; display a first area for displaying the first object; move at least one second object to a remaining area if there is at least one second object on the first area, the remaining area being an area other than the first area; and display the first object on the first area after moving the at least one second object to the remaining area.

Preferably, the electronic device is wherein the first object comprises at least one of a shortcut for at least one application program, at least one widget, and at least one content piece that is added to the home screen of the electronic device.

Preferably, the electronic device is wherein the processor deletes the at least one second object that is included in the first area if the at least one second object is moved to the remaining area.

Preferably, the electronic device is wherein the processor generates a folder that includes the at least one second object that is included in the first area if the at least one second object is moved to the remaining area.

Preferably, the electronic device is wherein the processor further comprises a program for displaying the first area and the at least one second object so as to overlap each other if there is at least one second object on the first area.

Preferably, the electronic device is wherein, if the remaining area for moving the at least one second object is an area that is insufficient for displaying the at least one second object, the processor further comprises a program for: generating a new page, the new page being a page other than a page including the first area; and moving the at least one second object to the new page.

Preferably, the electronic device is wherein, if the remaining area for moving the at least one second object is an area that is insufficient for displaying he at least one second object, the processor further comprises a program for: generating a folder that includes the at least one second object, generating a new page, the new page being other than a page including the first area; and moving the at least one second object included in the folder to the new page.

Preferably, the electronic device is wherein the processor further comprises a program for displaying the first object on the first area if the folder including the at least one second object is generated.

Preferably, the electronic device is wherein the processor further comprises a program for displaying the first object on the first area if there is not at least one second object on the first area.

Other aspects, advantages, and salient features of the disclosure will become apparent to those skilled in the art from the following detailed description, which, taken in conjunction with the annexed drawings, discloses various embodiments of the present disclosure.

### BRIEF DESCRIPTION OF THE DRAWINGS

The above and other aspects, features, and advantages of the certain embodiments of present disclosure will be more apparent from the following description taken in conjunction with the accompanying drawings, in which:
FIG. 1 is a block diagram of an electronic device according to an embodiment the present disclosure;
FIG. 2 is a detailed block diagram of a processor according to an embodiment of the present disclosure;
FIG. 3A is a flowchart of a procedure of configuring a screen in an electronic device according to an embodiment of the present disclosure;
FIG. 3B is a schematic diagram of an electronic device for configuring a screen of an electronic device according to an embodiment of the present disclosure;
FIG. 4 is a flowchart of a procedure of configuring a screen of an electronic device according to an embodiment of the present disclosure;
FIG. 5 is a flowchart of a procedure of configuring a screen of an electronic device according to an embodiment of the present disclosure;
FIGS. 6A, 6B, 6C, 6D, 6E, 6F, 6G, 6H, 6I and 6J are screens of an electronic device according to various embodiments of the present disclosure.
Throughout the drawings, it should be noted that like reference numbers are used to depict the same or similar elements, features, and structures.

### DETAILED DESCRIPTION

The following description with reference to the accompanying drawings is provided to assist in a comprehensive understanding of various embodiments of the present disclosure as defined by the claims and their equivalents. It includes various specific details to assist in that understanding but these are to be regarded as merely exemplary. Accordingly, those of ordinary skill in the art will recognize that various changes and modifications of the various embodiments described herein can be made without departing from the scope and spirit of the present disclosure. In addition, descriptions of well-known functions and constructions may be omitted for clarity and conciseness.

The terms and words used in the following description and claims are not limited to the bibliographical meanings, but, are merely used by the inventor to enable a clear and consistent understanding of the present disclosure. Accordingly, it should be apparent to those skilled in the art that the following description of various embodiments of the present disclosure is provided for illustration purpose only and not for the purpose of limiting the present disclosure as defined by the appended claims and their equivalents.

It is to be understood that the singular forms "a," "an," and "the" include plural referents unless the context clearly dictates otherwise. Thus, for example, reference to "a component surface" includes reference to one or more of such surfaces.

The present disclosure relates to a technology to edit a home screen of an electronic device.

In the following disclosure, the electronic device may include, a mobile communication terminal, a Personal Digital Assistant (PDA), a laptop, a smart phone, a netbook, a television, a Mobile Internet Device (MID), a Personal Computer (PC), an Ultra Mobile PC (UMPC), a tablet PC, a navigation device, a music player, or any other similar and/or suitable type of electronic device.

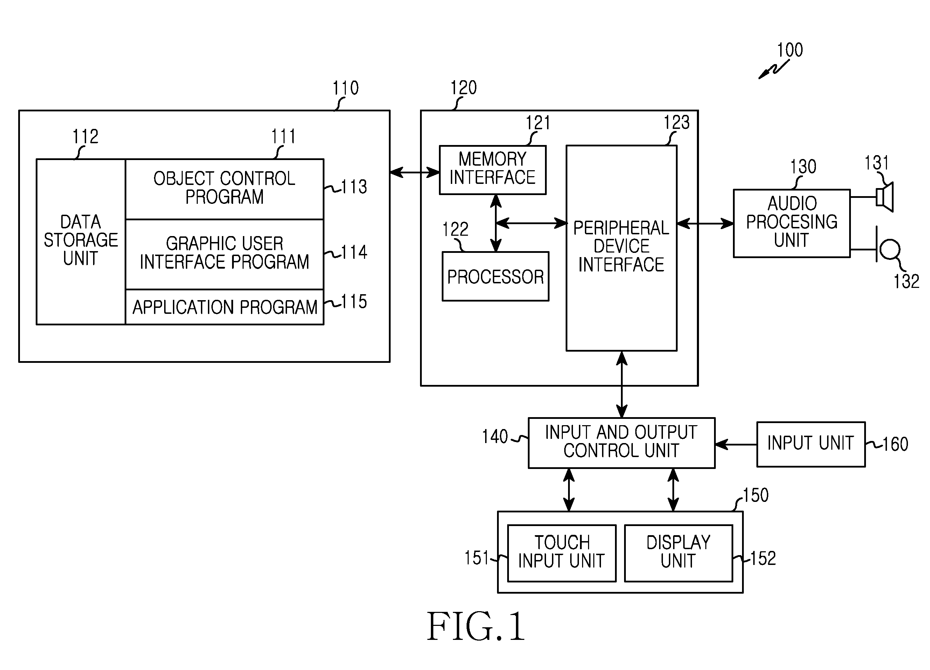

FIG. 1 is a block diagram of an electronic device according to the present disclosure.

Referring to FIG. 1, an electronic device 100 may include a memory 110, a processor unit 120, an audio processing unit 130, an input and output control unit 140, a touch screen unit 150, and an input unit 160. Here, the memory 110 may be in plural.

The memory 110 may include a program storage unit 111 that stores programs for controlling the operation of the electronic device 100, and a data storage unit 112 that stores data generated when executing the programs. The program storage unit 111 may include an object control program 113, a Graphic User Interface (GUI) program 114, and at least one application program 115. Here, the at least one program that is included in the program storage unit 111 is a set of instructions and may thus be represented as an instruction set. The data storage unit 112 may include at least one software component for storing information on an object that configures the home screen of the electronic device 100. The memory 110 may be any suitable hardware element that is a non-volatile computer readable medium, such as a Read-Only Memory (ROM), a Random Access Memory (RAM), a magnetic storage device, an optical storage device, or any other similar and/or suitable hardware element.

The object control program 113 may include at least one software component for configuring a screen. For example, when an event for adding a first object to the home screen occurs, the object control program 113 controls the GUI program 114 so that a first area for displaying the first object is displayed on the home screen. After displaying the first area, the object control program 113 determines whether there is at least one second object on the first area. If there is the at least one second object on the first area, then the object control program 113 moves the at least one second object from the first area to any area other than the first area to provide an area for displaying the first object. After providing the area for displaying the first object, the object control program 113 controls the GUI program 114 so that the first object is displayed on the home screen.

Furthermore, when an area for moving the at least one second object is insufficient or unavailable, the object control program 113 may control the GUI program 114 so that the at least one second object is moved and displayed to a new page of the home screen.

Moreover, when an area for moving the at least one second object is insufficient or unavailable, the object control program 113 may also generate a folder that includes the at least one second object. In this case, if the a move event occurs for the at least one second object that is included in the folder, then the object control program 113 may control the GUI interface 114 so that the at least one second object is moved to and displayed on an empty area of the home screen.

The GUI program 114 may include at least one software component for providing a GUI to be displayed on the display unit 152. For example, the GUI program 114 is controlled by the object control program 113 so that a first area for displaying a first object is displayed on the display unit 152. As another example, the GUI program 114 may be controlled by the object control program 113 so that the first object is displayed on the display unit 152. The application program 115 may include a software component corresponding to at least one application program that is installed in the electronic device 100.

The processor unit 120 may include a memory interface 121, at least one processor 122, and a peripheral device interface 123. Here, the memory interface 121, the at least one processor 122, and the peripheral device interface 123 that are included in the processor unit may be implemented in at least one Integrated Circuit (IC) or as separate components. The memory interface 121 controls the access of a component, such as the processor 122 or the peripheral device interface 123, to the memory 110. The peripheral device interface 123 controls a connection of the input and output peripheral device of the electronic device 100 to the processor 122 and the memory interface 121. The processor unit 120 may be any suitable hardware elements, such as a microprocessor, an IC, an Application Specific IC (ASIC), and Erasable Programmable Read Only Memory (EPROM), a controller, or any other similar and/or suitable hardware element or item.

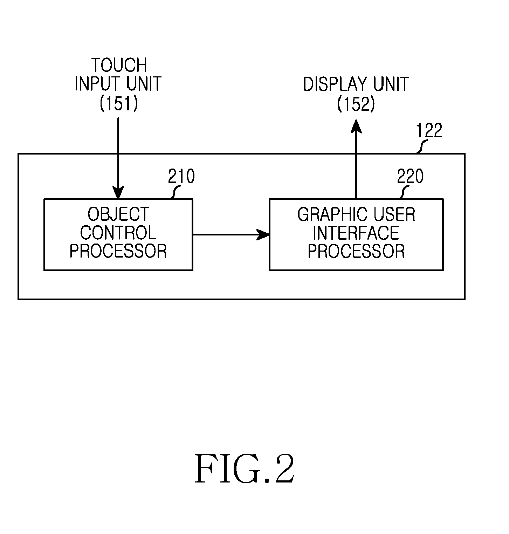

The processor 122 controls the electronic device 100 by using at least one software program so that the electronic device 100 provides various multimedia services. In this case, the processor 122 may execute at least one program stored in the memory 110 so as to provide a service according to a corresponding program. For example, the processor 122 may be configured so as to execute the object control program 113 and to control a screen configuration, as shown in FIG. 2.

The audio processing unit 130 provides an audio interface between a user and the electronic device 100 using a speaker 131 and a microphone 132.

The input and output control unit 140 provides an interface between an input and output unit, such as the touch screen 150 and the input unit 160, and the peripheral device interface 123.

The touch screen 150 is an input and output unit that performs inputting and outputting information, and may include a touch input unit 151 and a display unit 152.

The touch input unit 151 provides touch information, sensed through a touch panel, to the processor unit 120 through the input and output control unit 140. In this case, the touch input unit 151 provides touch information generated by an electronic pen, a finger, or any other similar and/or suitable input device, to the processor unit 120 through the input and output control unit 140.

The display unit 152 displays at least one of state information on an electronic device 100, texts input by a user, moving pictures and still images. For example, the display unit 152 displays display data provided from the GUI program 114. For example, the display unit 152 displays a first object by the GUI program 114. As another example, the display unit 152 may also display the first display by the GUI program 114. The display unit 152 may be any suitable display device, such as an Organic Light Emitting Diode (OLED) display, a Liquid Crystal Display (LCD), a Thin Film Transistor (TFT) display, an Active Matrix OLED (AMOLED) display, or any other similar and/or suitable display device. Furthermore, the display unit 152 and the touch input unit 151 may be formed to be one unit and/or one hardware element, or separate units or hardware elements.

The input unit 160 provides input data generated by user selection to the processor unit 120 through the input and output control unit 140. For example, the input unit 160 may include only a control button for controlling the electronic device 100. As another example, the input unit 160 may be configured in a key pad, having more than one button, for receiving input data from a user.

Furthermore, the electronic device 100 may further include a communication unit (not shown) for performing or connecting to a communication network for voice and data communications. In this case, the communication unit may be divided into a plurality of communication sub-modules that support different communication networks. For example, the communication network may include, but is not limited to, a Global System for Mobile communication (GSM) network, an Enhanced Data rates for GSM Evolution (EDGE) network, a Code Division Multiple Access (CDMA) network, a Wideband-CDMA (W-CDMA) network, a Long Term Evolution (LTE) network, an Orthogonal Frequency Division Multiple Access (OFDMA) network, a wireless Local Area Network (LAN), a Bluetooth network, and a Near Field Communication (NFC) network, or any other similar and/or suitable type of network.

FIG. 2 is a detailed block diagram of a processor according to an embodiment of the present disclosure.

Referring to FIG. 2, the processor 122 may include a connection control processor 210 and a GUI processor 220.

The object control processor 210 executes the object control program 113 of the program storage unit 111 and controls a screen configuration. For example, when an event for adding a first object to the home screen occurs, the object control processor 210 controls the GUI processor 220 so that a first area for displaying the first object is displayed on the home screen. After displaying the first area, the object control processor 210 determines whether there is at least one second object on the first area. If there is the at least one second object on the first area, then the object control processor 210 moves the at least one second object from the first area to any area other than the first area to provide an area for displaying the first object. After providing the area for displaying the first object, the object control processor 210 controls the GUI processor 220 so as to display the first object on the home screen.

Furthermore, if an area for moving the at least one second object is insufficient or unavailable, then the object control processor 210 may control the GUI processor 220 so that the at least one second object is moved to and displayed on a new page of the home screen. Moreover, if an area for moving the at least one second object is insufficient or unavailable, then the object control processor 210 may generate a folder that includes the at least one second object. In this case, if an event for moving the at least one second object that is included in the folder occurs, then the object control processor 210 may control the GUI processor 220 so that the at least one second object is moved to and displayed on an empty area of the home screen.

The GUI processor 220 executes the GUI program 114 of the program storage unit 111 and provides a GUI onto the display unit 152. For example, the GUI processor 220 is controlled by the object control processor 210 so that a first area for displaying a first object is displayed on the display unit 152. As another example, the GUI processor 220 may be controlled by the object control processor so that the fist object is displayed on the display unit 152.

In the present disclosure, the object control processor 210 of the electronic device 100 executes the object control program 113 and controls a screen configuration. However, the present disclosure is not limited thereto, and in other various embodiments, the electronic device 100 may include separate object configuring units that include the object control program 113.

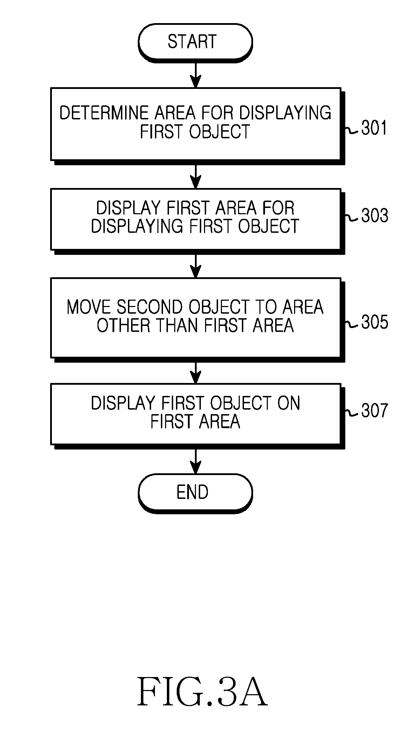

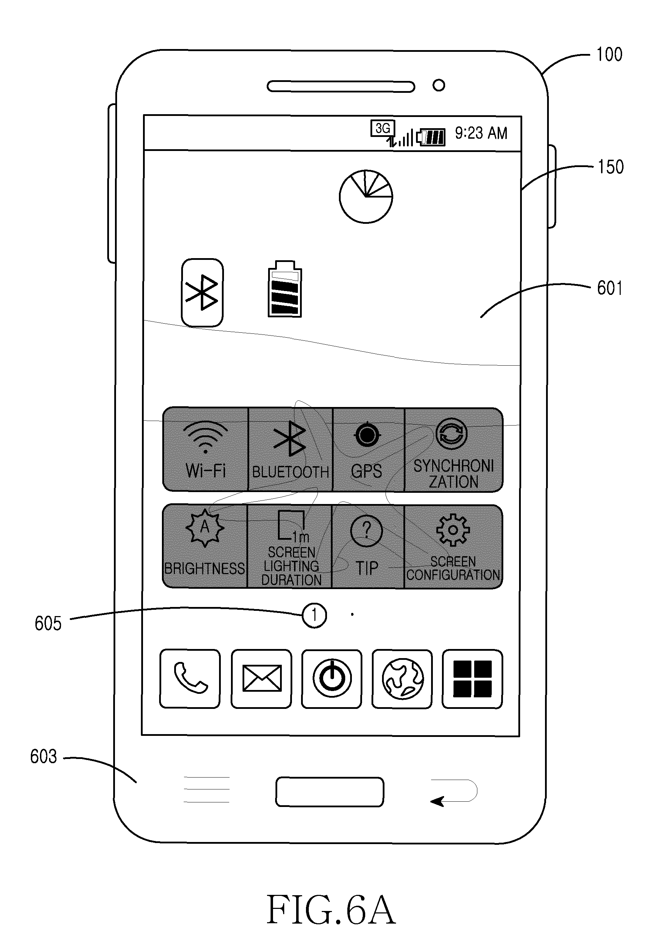

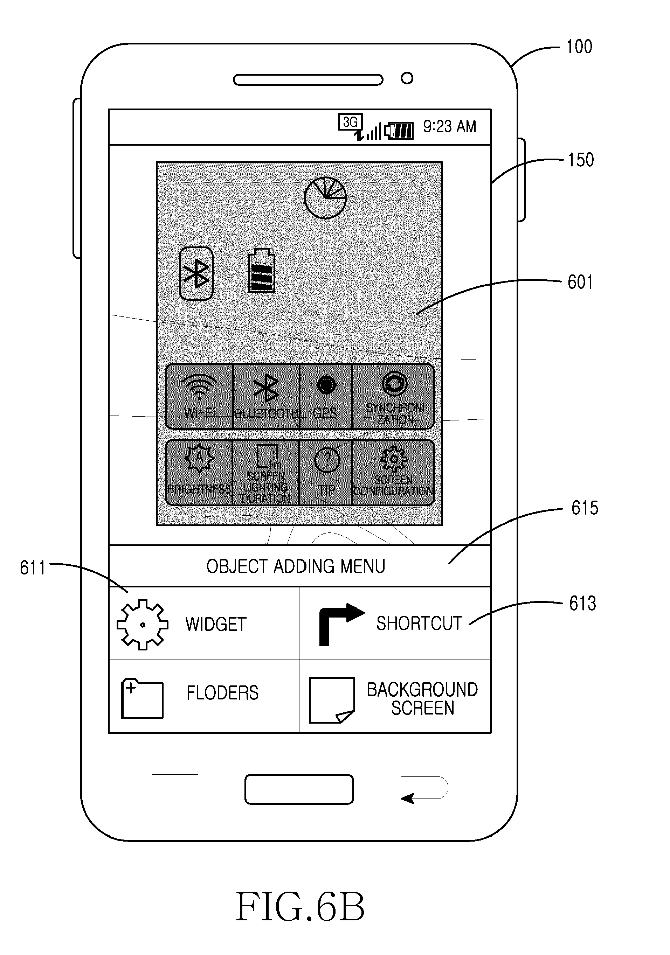

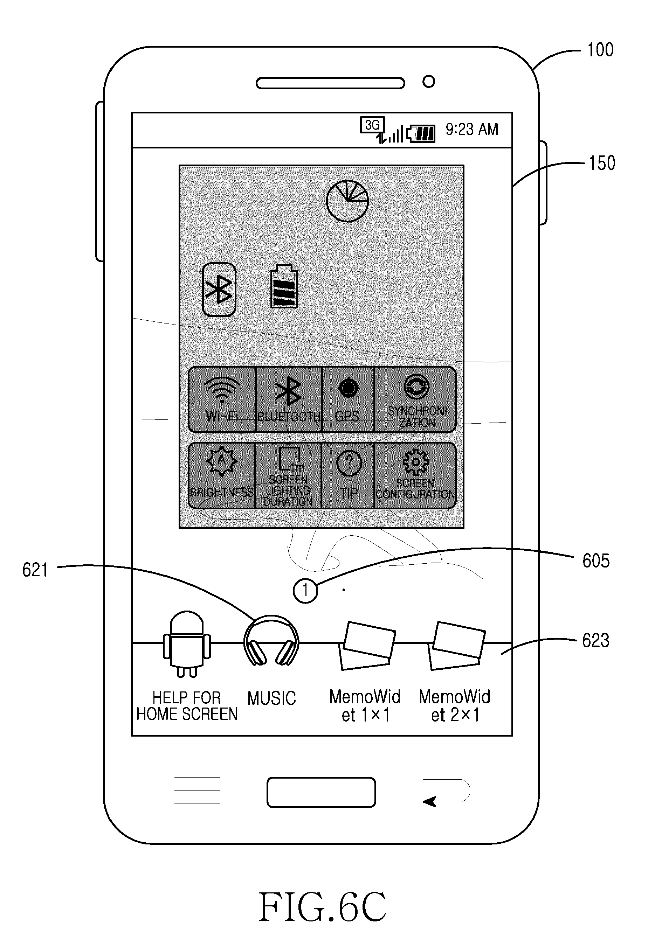

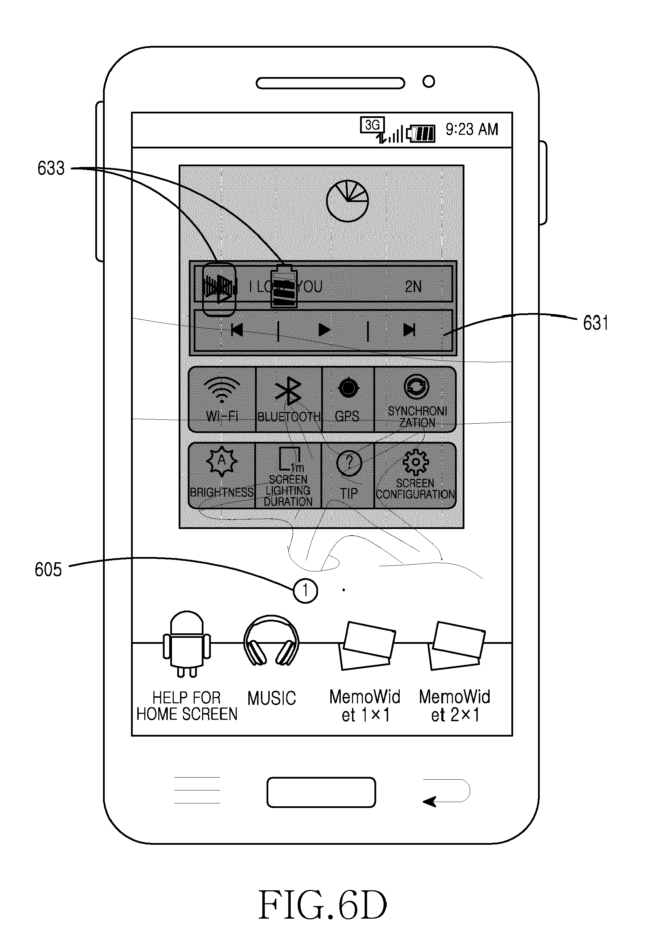

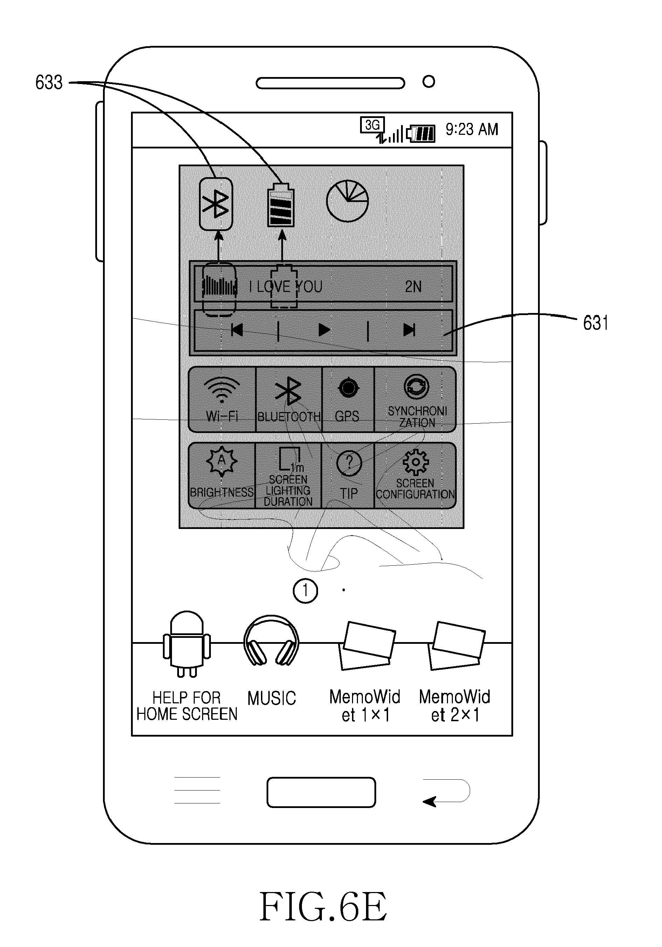

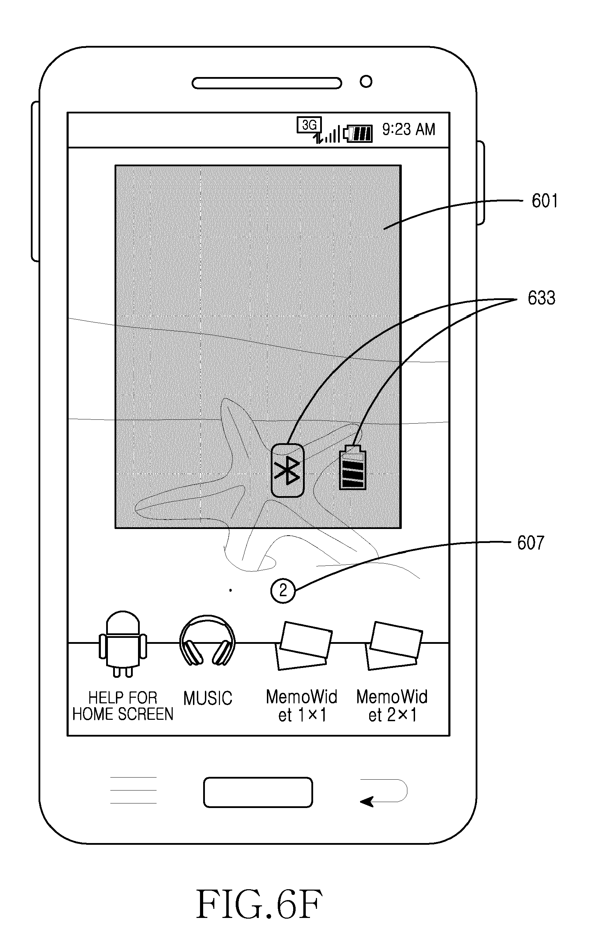

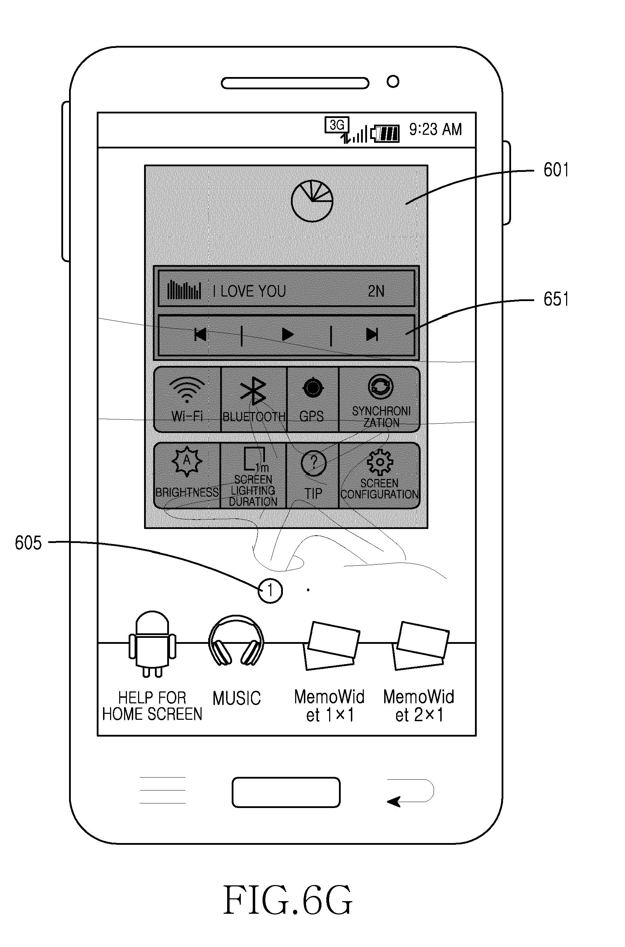

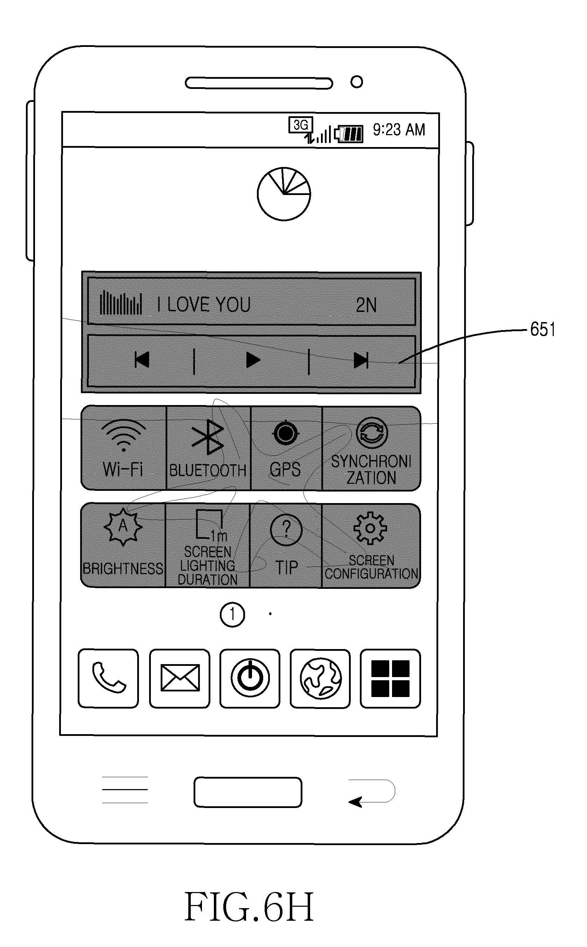

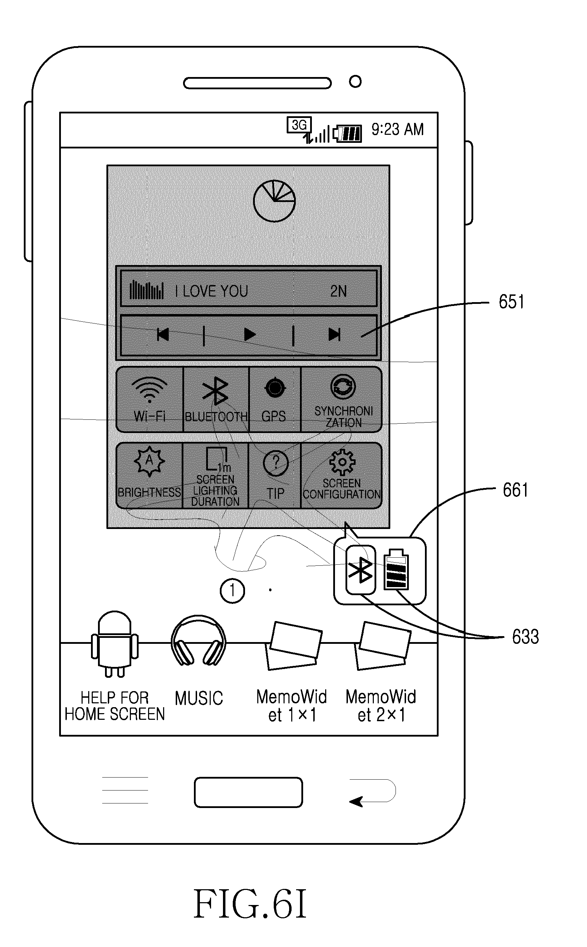

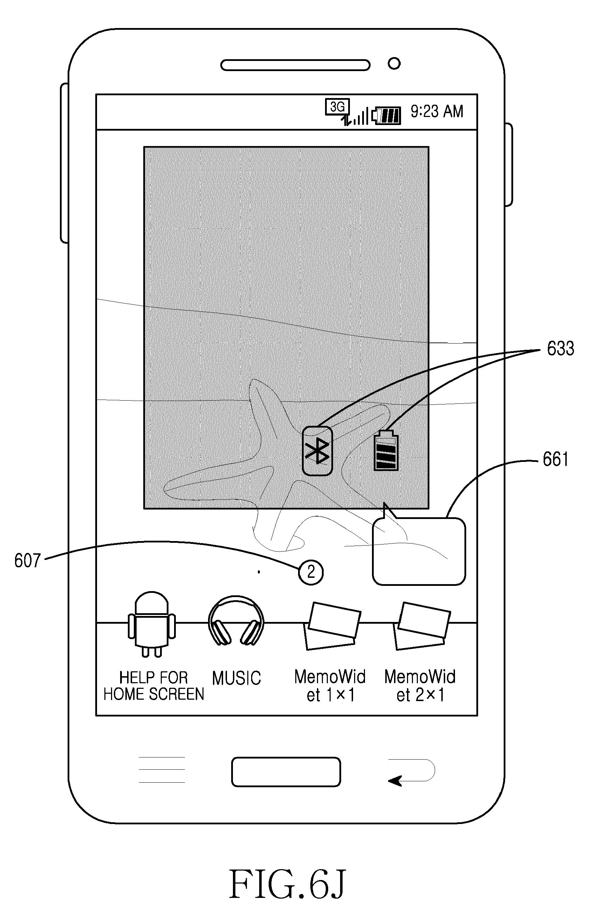

FIG. 3A is a flowchart of the procedure of configuring a screen in an electronic device according to another embodiment of the present disclosure. FIGS. 6A, 6B, 6C, 6D, 6E, 6F, 6G, 6H, 6I and 6J are screens of an electronic device according to various embodiments of the present disclosure.

Referring to FIGS. 3A, 6A, 6B, 6C, 6D, 6E, 6F, 6G, 6H, 6I and 6J, the electronic device 100 determines an area for displaying a first object in operation 301 if an event for adding a first object occurs on a home screen 601. For example, if a touch is sensed from the home screen 601 for a time equal to or longer than a reference time, as shown in FIG. 6A, then the electronic device 100 displays an Object Adding Menu 615 on the home screen 601, as shown in FIG. 6B. If a Widget 611 is selected from the Object Adding Menu 615, then the electronic device 100 displays a list of widgets 623, as shown in FIG. 6C. If a widget Music 621 is selected from the list of widgets 623, then the electronic device 100 determines an area for adding the widget Music 621 to the home screen 601.

After an area for displaying a first object is determined in operation 301, the electronic device 100 proceeds to operation 303 and displays a first area 631 for displaying the first object. For example, if the widget Music 621 is selected from the list of widgets 623, then the electronic device 100 displays the first area 631 for displaying the widget Music 621 on the home screen 601, as shown in FIGS. 6C and 6D. In this case, if there is at least one second object 633 on the first area 631, then the electronic device 100 may display the first area 631 and the at least one second object 633 so as to overlap each other.

After displaying the first area 631 in operation 303, the electronic device 100 proceeds to operation 305 and moves at least one second object to a remaining area other than the first area 631 if there is at least one second object on the first area 631. For example, if there is at least one second object 633 on the first area 631, as shown in FIG. 6D, then the electronic device 100 moves and displays the at least one second object 633 to an empty area on a first page 605 of the home screen 601, as shown in FIG. 6E. In this case, if the first page 605 of the home screen 601 has an area insufficient or unavailable for moving and displaying the at least one second object, then the electronic device 100 may move and display the at least one second object 633 to and on a second page 607 of the home screen 601, as shown in FIG. 6F. Moreover, if the first page 605 of the home screen 601 has an area insufficient or unavailable for displaying the at least one second object, then the electronic device 100 may generate a folder 661 that includes the at least one second object 633, as shown in FIG. 6I. In this case, as shown in FIG. 6J, if a touch event for the folder 661 that includes the at least one second object 633 occurs on the second page 607 of the home screen 601, then the electronic device 100 may move and display the at least one second object 633 that is included in the folder 661 to and on the second page 607 of the home screen 601.

If the second object is moved in operation 305, then the electronic device 100 proceeds to operation 307 and displays the first object on the first area 631. For example, the electronic device 100 displays a widget Music 651 on the first area 631, as shown in FIG. 6G. In this case, the electronic device 100 may automatically stop an edit mode for the home screen 601, as shown in FIG. 6H.

Furthermore, the electronic device 100 may delete the at least one second object that is included in the first area 631, and may display the first object on the first area 631. Moreover, the electronic device 100 may further generate a folder that includes at least one second object included in the first area 631, and may display the first object on the first area 631. Subsequent to operation 307, the electronic device 100 may terminate the procedure for controlling a screen configuration in an electronic device 100 as illustrated in FIG. 3A.

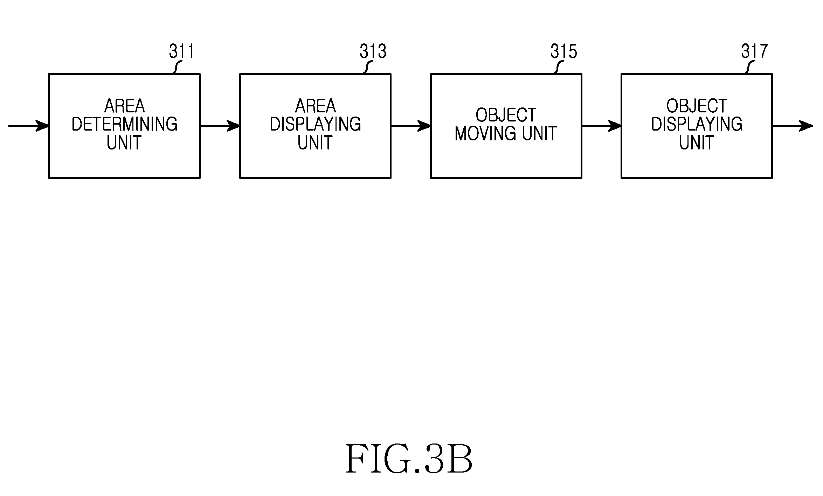

The procedures, as described above, for controlling a screen configuration in an electronic device 100 may be configured with a device for controlling the screen configuration in the electronic device 100 as shown in FIG. 3B.

FIG. 3B is a schematic diagram of an electronic device for configuring a screen of an electronic device according to an embodiment of the present disclosure.

Referring to FIG. 3B, the electronic device 100 may include an area determining unit 311 configured to determine an area for displaying a first object, an area displaying unit 313 configured to display a first area 631 for displaying the first object, an object moving unit 315 configured to move a second object to a remaining area other than the first area 631, and an object displaying unit 317 configured to display the first object on the first area 631. The area determining unit 311 determines an area for displaying the first object if an event for adding the first object occurs on the home screen 601. For example, if a touch is sensed from the home screen 601 for a time equal to or longer than a reference time, as shown in FIG. 6A, then the electronic device 100 displays the Object Adding Menu 615 on the home screen 601, as shown in FIG. 6B. If the Widget 611 is selected from the Object Adding Menu 615, then the electronic device 100 displays a list of widgets 623, as shown in FIG. 6C. If the widget Music 621 is selected from the list of widgets 623, then the electronic device 100 determines if there is an area for adding the widget Music 621 to the home screen 601.

The area displaying unit 313 displays a first area 631 for displaying the first object. For example, if the widget Music 621 is selected from the list of widgets 623, then the electronic device 100 displays the first area 631 for displaying the widget Music 621 on the home screen 601, as shown in FIGS. 6C and 6D. In this case, if there is at least one second object 633 on the first area 631, then the electronic device 100 may display the first area 631 and the at least one second object 633 to overlap each other.

The object moving unit 315 moves the at least one second object 633 to a remaining area other than the first area 631 if there is the at least one second object 633 on the first area 631. For example, if there is at least one second object 633 on the first area 631, as shown in FIG. 6D, then the electronic device 100 moves and displays the at least one second object 633 to and on an empty area on the first page 605 of the home screen 601, as shown in FIG. 6E. In this case, if the first page 605 of the home screen 601 has an area insufficient or unavailable for moving and displaying the at least one second object, then the electronic device 100 may move and display the at least one second object 633 to and on the second page 607 of the home screen 601, as shown in FIG. 6F. Moreover, if the first page 605 of the home screen 601 has an area insufficient or unavailable for moving and displaying the at least one second object, then the electronic device 100 may generate the folder 661 that includes the at least one second object 633, as shown in FIG. 6I. In this case, as shown in FIG. 6J, if a touch event for the folder 661 that includes the at least one second object 633 occurs on the second page 607 of the home screen 601, then the electronic device 100 may move the at least one second object 633 and display the at least one second object 633 on the second page 607 of the home screen 601.

The object displaying unit 317 displays the first object on the first area 631. For example, the electronic device 100 displays the widget music 651 on the first area 631, as shown in FIG. 6G. In this case, the electronic device 100 may automatically stop an edit mode for the home screen 601, as shown in FIG. 6H. Furthermore, the electronic device 100 may delete the at least one second object 633 that is included in the first area 631, and may display the first object on the first area 631. Moreover, the electronic device may generate a folder that includes at least one second object included in the first area 631, and display the first object on the first area 631.

As described above, the area determining unit 311, the area displaying unit 313, the object moving unit 315, and the object displaying unit 317 for controlling screen configurations of the electronic device 100 may be separate from each other. However, the present disclosure is not limited thereto, and units for controlling screen configurations of the electronic device 100 may be configured in a single unit.

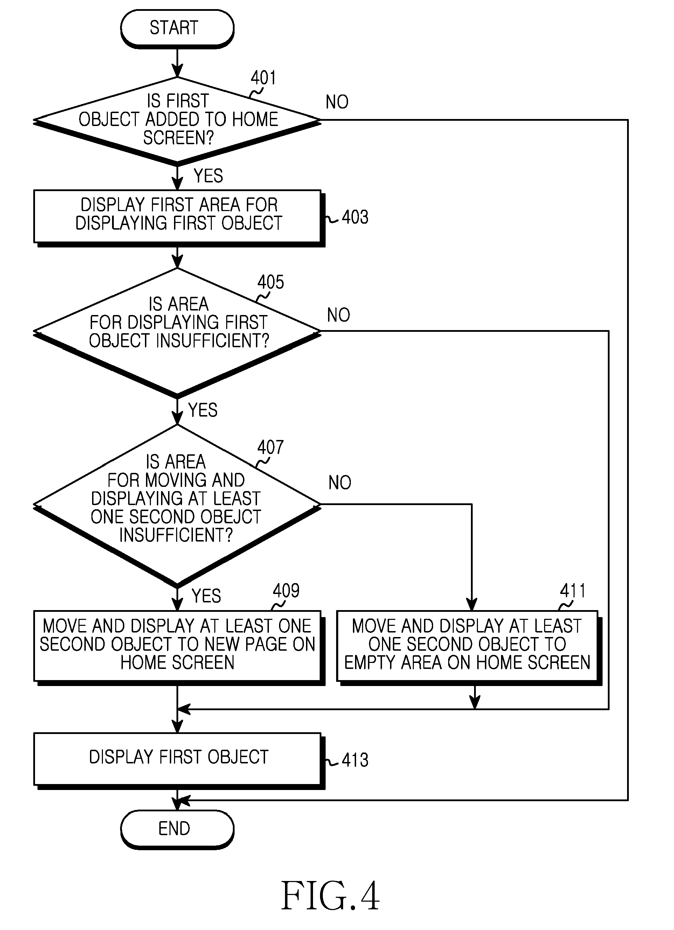

FIG. 4 is a flowchart of a procedure of configuring a screen of an electronic device according to another embodiment of the present disclosure.

Referring to FIG. 4, the electronic device 100 determines whether a first object is added to the home screen 601, in operation 401. For example, if a touch to the home screen 601 is sensed for a time equal to or longer than a reference, as shown in FIG. 6A, then the electronic device 100 displays the Object Adding Menu 615 on the home screen 601, as shown in FIG. 6B. If the Widget 611 is selected from the Object Adding Menu 615, then the electronic device 100 displays a list of widgets 623, as shown in FIG. 6C. If the widget Music 621 is selected from the list of widgets 623, then the electronic device 100 recognizes that the widget Music 621 is added to the home screen 601. As another example, the electronic device 100 may display the Object Adding Menu 615 on the home screen 601 through at least one operation on Menu 603 buttons, which may be at least one of a touch button and a physical button, as shown in FIGS. 6A and 6B. If the Widget 611 is selected from the Object Adding Menu 615, then the electronic device 100 displays the list of widgets 623, as shown in FIG. 6C. If the widget Music 621 is selected from the list of widgets 623, then the electronic device 100 may recognize that the widget Music 621 is added to the home screen 601. Here, the first object may include at least one of a shortcut 613 (see FIG. 6B) for at least one application program, at least one widget 611, and content that may be added to the home screen 601. If an object is not added to the home screen 601, then the electronic device 100 terminates the procedure illustrated in FIG. 4.

On the other hand, in a case where an object is added to the home screen 601 in operation 401, then the electronic device 100 proceeds to operation 403 and displays the first area 631 for displaying a first object. For example, if the widget Music 621 is selected from the list of widgets 623, as shown in FIGS. 6C and 6D, then the electronic device 100 displays, on the home screen 601, the first area 631 for displaying the widget Music 621. In this case, if there is at least one second object 633 on the first area 631, then the electronic device 100 may display the first area 631 and the at least one second object 633 to overlap each other.

After displaying the first area in operation 403, the electronic device 100 proceeds to operation 405 and determines whether an area for displaying a first object is insufficient. For example, the electronic device 100 determines whether there is at least one second object 633 on the first area 631, as shown in FIG. 6D.

If the area for displaying the first object is sufficient in operation 405, then the electronic device 100 proceeds to operation 413 and displays the first object. For example, if there is not at least one preset second object on the first area 631, as shown in FIG. 6D, then the electronic device 100 recognizes that an area for displaying the widget music is sufficient. Thus, the electronic device 100 displays the widget music 651 on the first area 631, as shown in FIG. 6G. In this case, the electronic device 100 may automatically stop an edit mode for the home screen 601, as shown in FIG. 6H.

On the other hand, if the area for displaying the first object is insufficient, then the electronic device 100 proceeds to operation 407 and determines whether an area for moving and displaying the at least one object is insufficient. For example, if there is at least one second object 633 on the first area 631, as shown in FIG. 6D, then the electronic device 100 recognizes that the area for displaying the widget music is insufficient. Thus, the electronic device 100 determines whether an area for displaying the at least one second object 633, which excludes the first area 631 on the first page 605 of the home screen 601, is insufficient.

If an area for moving and displaying the at least one second object is sufficient, then the electronic device 100 proceeds to operation 411, moves and displays the at least one second object to and on an empty area of the home screen 601. For example, the electronic device 100 moves and displays the at least one second object 633 to and on an empty area of the first page 605 of the home screen 601, as shown in FIG. 6E.

On the other hand, if an area for moving and displaying the at least one second object is insufficient, then the electronic device 100 proceeds to operation 409, and moves and displays the at least one second object to and on a new page of the home screen 601. For example, the electronic device 100 moves and displays the at least one second object 633 to and on the second page 607 of the home screen 601, as shown in FIG. 6F.

Subsequently, the electronic device 100 proceeds to operation 413 and displays the first object. For example, the electronic device 100 displays the widget music 651 on the first area 631, as shown in FIG. 6G. In this case, the electronic device 100 may automatically stop an edit mode for the home screen 601, as shown in FIG. 6H.

Furthermore, the electronic device 100 may delete the at least one second object 633 from the first area 631 and may display the first object on the first area 631. Moreover, the electronic device 100 may further generate a folder that includes the at least one second object 633 included in the first area 631, and may display the first object on the first area 631.

Furthermore, if the first page 605 of the home screen 601 has an area insufficient for moving and displaying the at least one second object, then the electronic device 100 may generate the folder 661 that includes the at least one second object 633, as shown in FIG. 6I. In this case, if a touch event for the folder 661 that includes the at least one second object 633 occurs on the second page 607 of the home screen 601, as shown in FIG. 6J, then the electronic device 100 may move and display, to and on the second page 607 of the home screen 601, the at least one second object 633 that is included in the folder 661. Subsequently, the electronic device 100 terminates the procedure illustrated in FIG. 4.

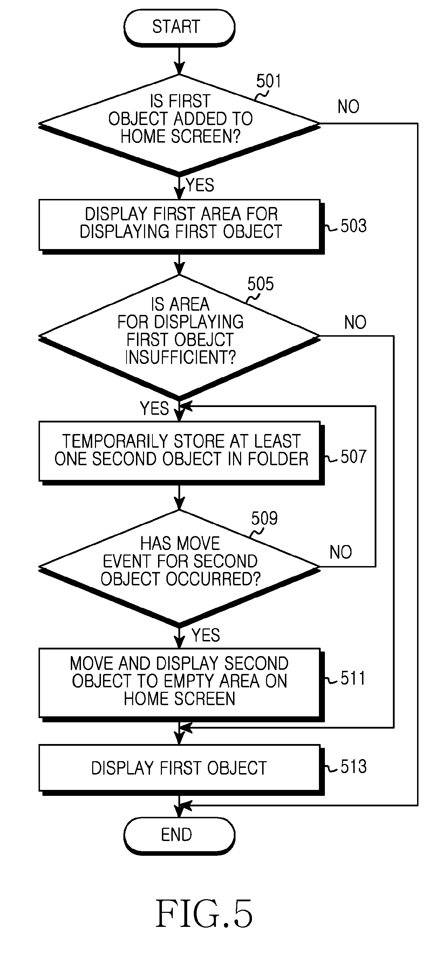

FIG. 5 is a flowchart of a procedure of configuring a screen of an electronic device according to another embodiment of the present disclosure.

Referring to FIG. 5, the electronic device 100 determines whether to add a first object to the home screen 601 in operation 501. For example, if a touch to the home screen 601 is sensed for a time equal to or longer than a reference, as shown FIG. 6A, then the electronic device 100 displays the "Object Adding Menu 615 on the home screen 601, as shown in FIG. 6B. If the Widget 611 is selected from the Object Adding Menu 615, then the electronic device 100 displays a list of widgets 623, as shown in FIG. 6C. If the widget Music 621 is selected from the list of widgets 623, then the electronic device 100 recognizes that the widget Music 621 is added to the home screen 601. As another example, the electronic device 100 may display the Object Adding Menu 615 on the home screen 601 through at least one operation using menu 603 buttons, as shown in FIGS. 6A and 6B. If the Widget 611 is selected from the Object Adding Menu 615, then the electronic device 100 displays the list of widgets 623, as shown in FIG. 6C. If the widget Music 621 is selected from the list of widgets 623, then the electronic device 100 may recognize that the widget Music 621 is added to the home screen 601. Here, the first object may include at least one of a shortcut 613 for at least one application program, at least one widget 611, and content that may be added to the home screen 601. If an object is not added to the home screen 601, then the electronic device 100 terminates the procedure illustrated in FIG. 5.

On the other hand, in a case where an object is added to the home screen 601, the electronic device 100 proceeds to operation 503 and displays a first area 631 for displaying a first object. For example, if the widget Music 621 is selected from the list of widgets 623, as shown in FIGS. 6C and 6D, then the electronic device 100 displays, on the home screen 601, a first area 631 for displaying the widget Music 621. In this case, if there is at least one second object 633 on the first area 631, then the electronic device 100 may display the first area 631 and the at least one second object 633 so as to overlap each other.

After displaying the first area 631, the electronic device 100 proceeds to operation 505 and determines whether an area for displaying a first object is insufficient or unavailable. For example, the electronic device 100 determines whether there is at least one second object 633 on the first area 631, as shown in FIG. 6D.

If the area for displaying the first object is sufficient, then the electronic device 100 proceeds to operation 513 and displays the first object. For example, if there is not at least one preset second object on the first area 631, as shown in FIG. 6D, then the electronic device 100 recognizes that an area for displaying the widget music is sufficient. Thus, the electronic device 100 displays the widget music 651 on the first area 631, as shown in FIG. 6G. In this case, the electronic device 100 may automatically stop an edit mode for the home screen 601, as shown in FIG. 6H.

On the other hand, if the area for displaying the first object is insufficient, then the electronic device 100 proceeds to operation 507 and generates the folder 661 that includes the at least one second object 633 so as to temporarily store the at least one second object 633 in the folder 661. For example, if the at least second object 633 is on the first area 631, as shown in FIG. 6D, then the electronic device 100 recognizes that an area for displaying the widget music is insufficient. Thus, the electronic device 100 generates the folder 661 that includes the at least one second object 633, as shown in FIG. 6I.

After the folder including the at least one second object, the electronic device 100 proceeds to operation 509 and determines whether a move event for the at least one second object 633, that is included in the folder 661, occurs. For example, the electronic device 100 determines whether a touch event for the folder 661 that includes the at least one second object 633 is sensed, as shown in FIG. 6I.

If the move event for the at least one second object 633 that is included in the folder 661 does not occur, then the electronic device 100 proceeds to operation 507 and maintains the display of the folder 661 that includes the at least one second object 633.

On the other hand, if the move event for the at least one second object 633 that is included in the folder 661 occurs, then the electronic device 100 proceeds to operation 511, moves and displays the at least one second object 633 to and on an empty area of the home screen 601. For example, if the touch event for the folder 661 occurs on the second page 607 of the home screen 601, as shown in FIG. 6J, then the electronic device moves and displays, to and on the second page 607 of the home screen 601, the at least one second object 633 that is included in the folder 661.

Subsequently, the electronic device 100 proceeds to operation 513 and displays the first object. For example, the electronic device 100 displays the widget music 651 on the first area 631, as shown in FIG. 6G. In this case, the electronic device 100 may automatically stop an edit mode for the home screen 601, as shown in FIG. 6H.

Furthermore, the electronic device 100 may display the first object on the first area 631 simultaneously with generating the folder 661 including the at least one second object 633 in operation 507.

Subsequently, the electronic device 100 terminates the procedure illustrated in FIG. 5A.

As described above, the present disclosure determines whether an area of a home screen is available and/or sufficient to display an object, and displays an area to which the object is added when adding the object to the home screen of the electronic device. Thus, a user of the electronic device may easily recognize an area to which the object is added and easily add the object.

While the present disclosure has been shown and described with reference to various embodiments thereof, it will be understood by those skilled in the art that various changes in form and details may be made therein without departing from the spirit and scope of the present disclosure as defined by the appended claims and their equivalents.

## Claims

1. A method of configuring a screen in an electronic device, the method comprising:
determining an area for displaying a first object;
displaying a first area for displaying the first object;
moving at least one second object to a remaining area if there is at least one second object on the first area, the remaining area being an area other than the first area; and
displaying the first object on the first area after moving the at least one second object to the remaining area.

2. The method of claim 1, wherein the first object comprises at least one of a shortcut for at least one application program, at least one widget, and at least one content piece that is added to the home screen of the electronic device.

3. The method of claim 1, wherein the moving of the at least one second object to the remaining area comprises deleting the at least one second object that is included in the first area.

4. The method of claim 1, further comprising displaying the first area and the at least one second object so as to overlap each other if there is at least one second object on the first area.

5. The method of claim 1, further comprising generating a new page, the new page being a page other than a page including the first area, if the remaining area for moving the at least one second object is an area that is insufficient for displaying the at least one second object; and
moving the at least one second object to the new page.

6. The method of claim 1, further comprising:
generating a folder that includes the at least one second object if the remaining area for moving the at least one second object is an area that is insufficient for displaying the at least one second object;
generating a new page, the new page being a page other than a page including the first area; and
moving the at least one second object included in the folder to the new page.

7. An electronic device comprising:
at least one processor;
at least one memory; and
at least one program stored in the memory, wherein the at least one program is configured to be executable by the at least one processor, and the at least one processor is configured to:
determine an area for displaying a first object;
display a first area for displaying the first object;
move at least one second object to a remaining area if there is at least one second object on the first area, the remaining area being an area other than the first area; and
display the first object on the first area after moving the at least one second object to the remaining area.

8. The electronic device of claim 7, wherein the first object comprises at least one of a shortcut for at least one application program, at least one widget, and at least one content piece that is added to the home screen of the electronic device.

9. The electronic device of claim 7, wherein the processor deletes the at least one second object that is included in the first area if the at least one second object is moved to the remaining area.

10. The electronic device of claim 7, wherein the processor further comprises a program for displaying the first area and the at least one second object so as to overlap each other if there is at least one second object on the first area.

11. The electronic device of claim 7, wherein, if the remaining area for moving the at least one second object is an area that is insufficient for displaying the at least one second object, the processor further comprises a program for:
generating a new page, the new page being a page other than a page including the first area; and
moving the at least one second object to the new page.

12. The electronic device of claim 7, wherein, if the remaining area for moving the at least one second object is an area that is insufficient for displaying he at least one second object, the processor further comprises a program for:
generating a folder that includes the at least one second object,
generating a new page, the new page being other than a page including the first area; and
moving the at least one second object included in the folder to the new page.

13. A computer program comprising computer program code means adapted to perform all the steps of any one of the method claims 1 to 6 when the computer program is run on a processor.
